(19) Europäisches Patentamt
European Patent Office
Office européen des brevets

(11) **EP 4 424 640 A1**

(12) **EUROPEAN PATENT APPLICATION**
published in accordance with Art. 153(4) EPC

(43) Date of publication:
**04.09.2024 Bulletin 2024/36**

(21) Application number: **22886935.0**

(22) Date of filing: **24.10.2022**

(51) International Patent Classification (IPC):
*C01F 11/18* (2006.01)      *D21H 19/38* (2006.01)

(52) Cooperative Patent Classification (CPC):
**C01F 11/18; D21H 19/38**

(86) International application number:
**PCT/JP2022/039483**

(87) International publication number:
**WO 2023/074608 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.10.2021   JP 2021175529**

(71) Applicant: **Shiraishi Kogyo Kaisha, Ltd.**
**Osaka-shi, Osaka 530-0005 (JP)**

(72) Inventors:
• **SAKAGUCHI, Hiromitsu**
**Amagasaki City, Hyogo 660-0085 (JP)**
• **OGUNI, Sayaka**
**Amagasaki City, Hyogo 660-0085 (JP)**
• **EGUCHI, Kenichiro**
**Amagasaki City, Hyogo 660-0085 (JP)**
• **NANRI, Yasunori**
**Amagasaki City, Hyogo 660-0085 (JP)**

(74) Representative: **Global IP Europe**
**Patentanwaltskanzlei**
**Pfarrstraße 14**
**80538 München (DE)**

(54)   **CALCIUM CARBONATE WATER SLURRY AND METHOD FOR PRODUCING CALCIUM CARBONATE WATER SLURRY**

(57)   Provided is a method for producing a water slurry that contains a calcium carbonate having a BET specific surface area and an average particle size each within a predetermined range and having a primary particle aspect ratio within a predetermined range. The water slurry contains the calcium carbonate at a high concentration but has a low viscosity. Also provided is a calcium carbonate water slurry comprising a calcium carbonate. In the water slurry, the primary particles of the calcium carbonate have a BET specific surface area of 3 to 15 $m^2/g$ and an aspect ratio of 2 to 10 as calculated from image analysis of an electron microscope image, and the primary particles and/or the aggregated particles of the calcium carbonate have a volume-based average particle size of 0.3 to 1 $\mu$m as determined by laser diffraction particle size measurement. The water slurry has a solid content concentration of the calcium carbonate of 70% by weight or more, a Brookfield viscosity (at a rotation rate of 60 rpm) of 2,000 mPa·s or less, and a high-shear viscosity (at a rotation rate of 1,100 rpm) of 80 mPa·s or less.

Fig. 1

SHIRAISHI CENTRAL LABORATORIES   3.0kV   X30,000   WD 16.4mm   100nm

**Description**

**FIELD**

The present invention relates to a calcium carbonate water slurry and a method for producing the calcium carbonate water slurry.

**BACKGROUND**

In recent years, there is a strong demand for printed materials to convey the content visually and powerfully, for example, by using many photographs or designs as well as various colors. As such printed materials are further visualized and become more colorful, high-quality coated papers are strongly demanded.

Of the coated paper qualities, particularly important qualities for printing include whiteness, opacity, white paper glossiness, and printing glossiness. The whiteness relates to contrast, the opacity relates to bleed-through, and the glossiness relates to the premium quality appearance of a printed material. All these qualities are required to be satisfied in good balance. For example, fine coated papers, which have been increasingly demanded, are needed to have lighter weight and higher opacity.

As the coating pigment for coated papers, precipitated calcium carbonate, ground calcium carbonate (heavy calcium carbonate), kaolin, talc, silica, titanium dioxide, or the like are typically used. Generally, a pigment having a smaller particle size has higher gloss development, and thus a pigment may be ground to have a smaller particle size. However, if the particle size of a pigment were not more than wavelengths in the visible light region, the particle size would not contribute to the opacity. Even if the average particle size of a pigment is in a region contributing to the opacity, some pigment grinding methods may cause excess grinding. This results in a broad particle size distribution, and many fine particles fail to contribute to the opacity. In addition, a resulting coating layer has a higher density.

Generally, when precipitated calcium carbonate is used as the coating pigment, the coated paper is likely to have a slightly high whiteness, a slightly high opacity, or the like. Precipitated calcium carbonate, however, has poor flowability in the liquid state. For a papermaking paint required to have high flowability, precipitated calcium carbonate cannot be contained at a high concentration of more than 50%, which can be achieved with a wet-ground heavy calcium carbonate. In such a condition, precipitated calcium carbonate fails to achieve the inherent gloss development. To provide a pigment having good gloss development without impairing the high whiteness and opacity as advantages of precipitated calcium carbonate, such a precipitated calcium carbonate as below is required: the fine particles not contributing to the opacity are reduced to the maximum extent; the particle size distribution is as sharp as possible in a region where the average particle size can achieve high glossiness; and the precipitated calcium carbonate has excellent flowability to be suitably contained at a high concentration.

A glossy coated paper typically has white paper glossiness by using a fine particle pigment such as kaolin clay having high gloss development or by using an organic pigment such as a plastic pigment and has a low density by optimizing the coating process including a reduction in calendering linear pressure or by using a bulky base paper. Accordingly, the glossiness and the bulkiness are achieved. It has been very difficult to achieve both the glossiness and the bulkiness by using only the precipitated calcium carbonate. For recent coated papers for printing, high solid coating has been widely used. In the technique, the feature of a wet-ground heavy calcium carbonate having good flowability is used, and the heavy calcium carbonate is contained at a high concentration to increase the concentration of a coating liquid. By increasing the concentration of a coating liquid as described above, the glossiness of a coated paper can be increased to some extent. However, when a similar technique is performed with a precipitated calcium carbonate, or when a wet-ground precipitated calcium carbonate is used, the concentration of a coating liquid cannot be increased in some cases because the precipitated calcium carbonate, in which primary particles strongly aggregate due to the production, has a much higher Brookfield viscosity or a much higher high-shear viscosity than wet-ground heavy calcium carbonate. As described above, when a precipitated calcium carbonate having poor flowability is intended to be used in a coating liquid, the precipitated calcium carbonate is unfortunately used under unfavorable conditions for an improvement in glossiness as compared with the heavy calcium carbonate. For example, precipitated calcium carbonate is contained in a coating liquid at a lower concentration.

Typically, when a pigment has a sharp particle size distribution, the closest packing of pigment particles is prevented in a coating layer, and thus a bulky coating layer can be expected to be obtained. However, a precipitated calcium carbonate that is to be the material of a coated paper and has all the bulkiness, the high opacity, the high white paper glossiness, and the high whiteness has not been known yet.

Patent Document 1 discloses a method for preparing an aqueous precipitated calcium carbonate slurry. The method comprises subjecting a low-concentration aqueous slurry of precipitated calcium carbonate to concentration treatment or the like to give a high-concentration slurry having a certain solid content concentration, adding a viscosity-reducing agent, subjecting the mixture to primary dispersion treatment with a mixer, and subjecting the product to secondary dispersion treatment by sand grinding. According to Patent Document 1, the precipitated calcium carbonate in the aqueous slurry after the secondary dispersion treatment is a spindle or scalenohedral calcium carbonate having a BET specific surface area of 5.0 to 20 $m^2/g$.

Patent Document 2 discloses a slurry of a precipitated calcium carbonate prepared by wet-grinding precipitated calcium carbonate with a sand grinder. The precipitated calcium carbonate has a volume-based average primary particle size of 0.3 to 0.8 $\mu$m and softly aggregates.

Patent Document 3 discloses an engineered calcium carbonate produced by wet-grinding spindle calcite crystals of precipitated calcium carbonate as the starting material at a concentration of 50% or less. The engineered calcium carbonate has an average particle size ($d_{50}$) of 0.1 to 0.5 $\mu$m as determined with an X-ray transmission particle size distribution analyzer, has a BET specific surface area of 10 to 30 $m^2/g$, and has a particle size distribution sharpness degree of 50 or more as determined with an X-ray transmission particle size distribution analyzer and as calculated in accordance with the equation:

$$\text{sharpness degree} = (d_{30}/d_{70}) \times 100$$

[where $d_{30}$ is the particle size at an integration of 30% by weight, and $d_{70}$ is the particle size at an integration of 70% by weight].

CITATION LIST

PATENT LITERATURE

> Patent Document 1: JP 11-335119 A
> Patent Document 2: JP 2007-161537 A
> Patent Document 3: JP 2009-234894 A

**BRIEF SUMMARY**

**TECHNICAL PROBLEM**

The preparation method disclosed in Patent Document 1 is characterized in that dispersion treatment is performed twice such that the BET specific surface area increases by a certain value in each treatment. In the first rough slurry dispersing, a mixer is used. Precipitated calcium carbonate, however, has poor dispersibility. Even with a viscosity-reducing agent, such mixer dispersing is difficult to achieve the dispersion at a high concentration of 70% or more, preferably 72%, and more preferably 73% or more, which are intended in the present invention. Although a spindle or scalenohedral calcium carbonate is disclosed, any specific shape or figure is not described. Considering a large variation (1.05 to 1.50) in BET specific surface area before and after the dispersion treatment, the precipitated calcium carbonate particle probably loses the shape having an aspect ratio (directional properties). It seems to be difficult to produce a calcium carbonate water slurry maintaining high opacity but having high glossiness intended in the present invention.

The precipitated calcium carbonate slurry disclosed in Patent Document 2 is characterized in that the primary particle size is 0.3 to 0.8 $\mu$m and soft aggregates are included. The document discloses that the slurry can markedly improve the opacity after printing, but no data on the improvement is disclosed. The document also discloses a method of producing 25% by weight of a precipitated calcium carbonate slurry, but the document discloses no process of producing a calcium carbonate slurry having a concentration high enough to achieve high glossiness on a coated paper or a fine coated paper.

When the engineered calcium carbonate disclosed in Patent Document 3 is used as a coating liquid, the opacity or the whiteness of a coated paper should be improved. The document, however, discloses that calcium carbonate is ground at a solid content concentration of 50% or less. Accordingly, to prepare a coating liquid in an example, fine kaolin particles are used in combination to give a high concentration color of 60%. Considering the increase in BET specific surface area by twice or more before and after the grinding process, the calcium carbonate probably loses the spindle shape, and it is difficult to prepare a water slurry suitable for high-speed coating and achieving both the high glossiness and the high opacity on a coated paper. These prior inventions are difficult to prepare a precipitated calcium carbonate that maintains the high glossiness and the high opacity intended in the present invention and has excellent flowability suitable for a formulation of precipitated calcium carbonate at a high concentration. Hence, the development of a pigment capable of improving these performances has been demanded. The present invention is, therefore, intended to provide a method for producing a water slurry containing calcium carbonate having a BET specific surface area and an average particle size each within a predetermined range and having a primary particle aspect ratio within a predetermined range. The water slurry has a high concentration but has a low viscosity and is suitable for high-speed coating. To produce the water slurry, it is very important to crack the aggregates of calcium carbonate particles while the shape of the primary particle is maintained.

**SOLUTION TO PROBLEM**

One aspect of the present invention is a calcium carbonate water slurry comprising:

a calcium carbonate, wherein
primary particles of the calcium carbonate have a BET specific surface area of 3 to 15 $m^2/g$ and an aspect ratio of 2 to 10 as calculated from image analysis of an electron microscope image, primary particles and/or aggregated particles of the calcium carbonate have a volume-based average particle size of 0.3 to 1 $\mu$m as determined by laser diffraction particle size measurement, and
the water slurry has a solid content concentration of the calcium carbonate of 70% by weight or more, a Brookfield viscosity (at a rotation rate of 60 rpm) of 2,000 mPa·s or less, and a high-shear viscosity (at a rotation rate of 1,100 rpm) of 80 mPa s or less.

It is preferable that the calcium carbonate water slurry comprises a polymer dispersant selected from the group consisting of a polycarboxylic acid dispersant, a polyacrylic acid dispersant, a naphthalenesulfonic acid-formalin condensate dispersant, and polyethylene glycol or a surfactant dispersant selected from the group consisting of an alkylsulfonic acid dispersant, a quaternary ammonium dispersant, and a higher alcohol alkylene oxide.

Another aspect of the present invention is a method for producing a calcium carbonate water slurry, the method comprising the steps of:

putting water, a grinding medium, and a dispersant into a dispersion device;
putting a calcium carbonate into the dispersion device multiple times;
stirring the mixture; and
wet-grinding the calcium carbonate to give a calcium carbonate water slurry, wherein
the calcium carbonate water slurry is ground until a viscosity of the calcium carbonate water slurry reaches a local minimum value or approximately the local minimum value,
in the calcium carbonate water slurry, primary particles of the calcium carbonate have a BET specific surface area of 3 to 15 $m^2/g$ and an aspect ratio of 2 to 10 as calculated from image analysis of an electron microscope image,
primary particles and/or aggregated particles of the calcium carbonate have a volume-based average particle size of 0.3 to 1 $\mu$m as determined by laser diffraction particle size measurement,
the calcium carbonate water slurry has a solid content concentration of 70% by weight or more, and
the calcium carbonate water slurry has a Brookfield viscosity (at a rotation rate of 60 rpm) of 2,000 mPa·s or less and a high-shear viscosity (at a rotation rate of 1,100 rpm) of 80 mPa·s or less.

It is preferable that, in the stirring, an integral stirring output is 0.5 kW/kg or more.

It is preferable that the calcium carbonate to be put into the dispersion device has a volume-based average particle size of 10 $\mu$m or less as determined by laser diffraction particle size measurement, and the primary particles have an aspect ratio of 2 to 10 as calculated from image analysis of an electron microscope image.

It is preferable that the calcium carbonate contained in the calcium carbonate water slurry has a volume-based particle size distribution width of 5 or less as determined by laser diffraction particle size measurement and calculated in accordance with equation:

particle size distribution width = ([D90 value of calcium carbonate]-[D10 value of calcium carbonate])/volume-based average particle size of calcium carbonate as   [Mathematical Equation 1]
determined by laser diffraction particle size measurement (where D90 value is a particle size of a calcium carbonate at a cumulative volume of 90% in a volume-based particle size cumulative distribution as determined by laser diffraction particle size measurement; and D10 value is a particle size of the calcium carbonate at a cumulative volume of 10% in the volume-based particle size cumulative distribution as determined by laser diffraction particle size measurement).

It is preferable that the calcium carbonate to be put into the dispersion device is produced by a causticization process.

Another aspect of the present invention is a calcium carbonate water slurry produced by the method described above.

**ADVANTAGEOUS EFFECTS**

The calcium carbonate water slurry produced by the method for producing calcium carbonate water slurry of the present invention is particularly used as a coating pigment for coated papers, can improves the whiteness, the opacity, and the glossiness of coated papers, and can maintain the bulkiness.

**BRIEF DESCRIPTION OF DRAWINGS**

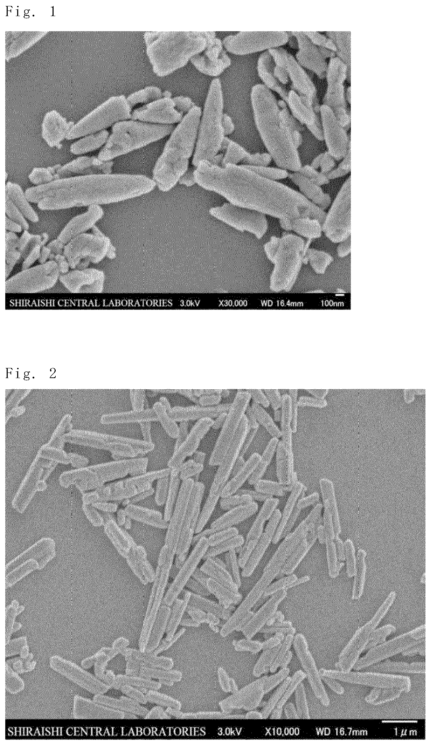

FIG. 1 is an electron micrograph (magnified 30,000 times) of the calcium carbonate contained in the calcium carbonate water slurry produced in Example 1.
FIG. 2 is an electron micrograph (magnified 10,000 times) of the calcium carbonate contained in the calcium carbonate water slurry produced in Example 2.

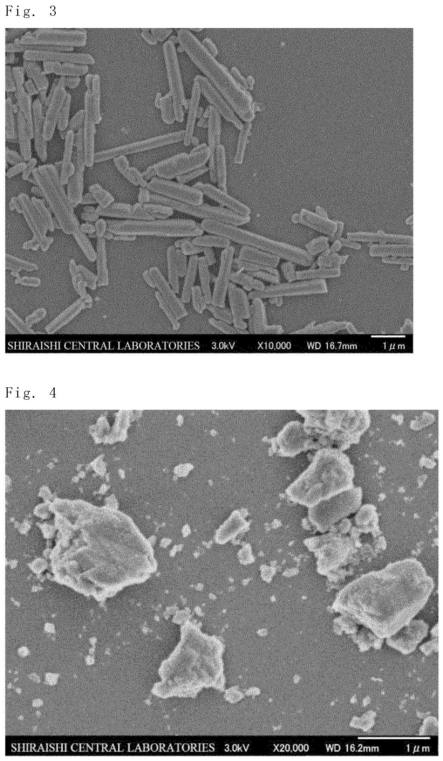

FIG. 3 is an electron micrograph (magnified 10,000 times) of the calcium carbonate contained in the calcium carbonate water slurry produced in Example 3.
FIG. 4 is an electron micrograph (magnified 20,000 times) of the calcium carbonate contained in the calcium carbonate water slurry produced in Comparative Example 1.

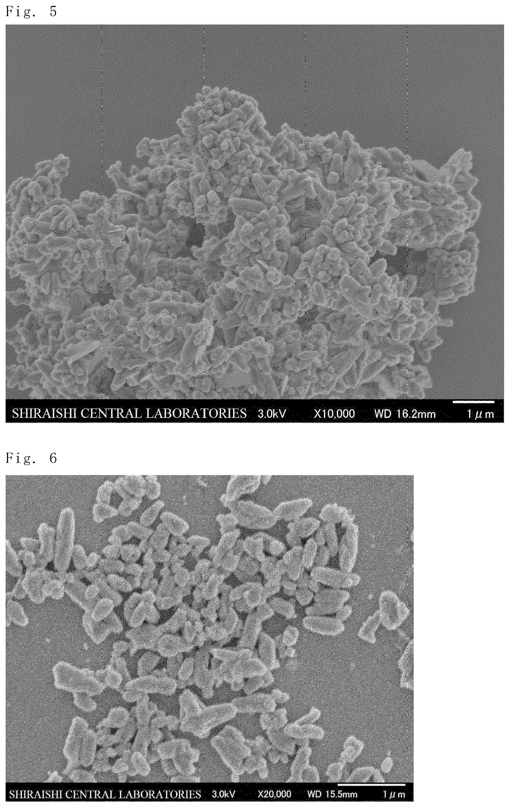

FIG. 5 is an electron micrograph (magnified 10,000 times) of the calcium carbonate contained in the calcium carbonate water slurry produced in Comparative Example 2.
FIG. 6 is an electron micrograph (magnified 20,000 times) of the calcium carbonate contained in the calcium carbonate water slurry produced in Comparative Example 3.
FIG. 7 is an electron micrograph (magnified 20,000 times) of the calcium carbonate contained in the calcium carbonate water slurry produced in Comparative Example 4.
FIG. 8 is a graph showing the relationship between the viscosity of a calcium carbonate water slurry and the grinding time.

**DETAILED DESCRIPTION**

Embodiments of the present invention will be described in further detail, but the present invention is not limited to the following embodiments.

A first embodiment of the present invention is a calcium carbonate water slurry comprising a calcium carbonate. In the water slurry, primary particles of the calcium carbonate have a BET specific surface area of 3 to 15 $m^2/g$ and an aspect ratio of 2 to 10 as calculated from image analysis of an electron microscope image, and primary particles and/or aggregated particles of the calcium carbonate have a volume-based average particle size of 0.3 to 1 $\mu$m as determined by laser diffraction particle size measurement. The water slurry has a solid content concentration of the calcium carbonate of 70% by weight or more, a Brookfield viscosity (at a rotation rate of 60 rpm) of 2,000 mPa·s or less, and a high-shear viscosity (at a rotation rate of 1,100 rpm) of 80 mPa·s or less.

In the present description, the term "water slurry" means a mixed suspension liquid of water and a solid. In other words, the calcium carbonate water slurry is the aqueous liquid in the suspension state in which calcium carbonate dissolved in water and calcium carbonate not dissolved in water are both contained. In the calcium carbonate dissolved and/or dispersed in the calcium carbonate water slurry in the embodiment, the primary particles have a BET specific surface area of 3 to 15 $m^2/g$ and an aspect ratio of 2 to 10 as calculated from image analysis of an electron microscope image, and the primary particles and/or the aggregated particles have a volume-based average particle size of 0.3 to 1 $\mu$m as determined by laser diffraction particle size measurement. The BET specific surface area can be determined as follows: gas molecules (such as nitrogen molecules) having a known adsorbate occupied area are allowed to adsorb to a substance; and the adsorption amount is calculated. The BET specific surface area of a calcium carbonate can be determined in accordance with "Determination of the specific surface area of powders (solids) by gas adsorption-BET method" in Japanese Industrial Standards JIS Z 8830. In the embodiment, the BET specific surface area is 3 to 15 $m^2/g$, preferably 4 to 10 $m^2/g$, and more preferably 6 to 9 $m^2/g$. The aspect ratio of a calcium carbonate is the length-to-width ratio of a particle of the calcium carbonate. In the present embodiment, the aspect ratio means the ratio of the major diameter to the minor diameter of a primary particle of a calcium carbonate. The aspect ratio of a calcium carbonate can be calculated from image analysis of electron microscope observation. The aspect ratio of calcium carbonate dissolved and/or dispersed in the calcium carbonate water slurry in the embodiment is 2 to 10, preferably 2.5 to 8, and more preferably 3 to 7. In the embodiment, the volume-based average particle size as determined by laser diffraction particle size measurement means the average particle size based on volume and measured from a light intensity distribution pattern determined by analyzing diffracted light or scattering light emitted from particles that are irradiated with a laser beam. The calcium carbonate contained in the calcium carbonate water slurry of the embodiment has a volume-based average particle size of 0.3 to 1 μm and preferably 0.5 to 0.8 μm.

In the calcium carbonate water slurry in the embodiment, the solid content concentration of the calcium carbonate is 70% by weight or more and preferably 72% or more. The calcium carbonate water slurry has a Brookfield viscosity (at a rotation rate of 60 rpm) of 2,000 mPa·s or less and preferably 1,500 mPa·s or less and has a high-shear viscosity (at a rotation rate of 1,100 rpm) of 80 mPa·s or less and preferably 50 mPa·s or less. The Brookfield viscosity can be determined in accordance with Japanese Industrial Standards, JIS Z 8803: 2011. The high-shear viscosity (i.e., viscosity at high shear) is determined by using an apparatus capable of measuring viscosities in a high shear rate region, typically including a high-shear viscometer, DV-10 manufactured by HERCULES. In the embodiment, the measurement can be performed while the rotation rate of a rotational viscometer is set at 1,100 rpm. Using the calcium carbonate water slurry in the embodiment as a coating pigment enables the production of a bulky coated paper having a high opacity, a high glossiness, and a high whiteness. Typically, synthetic calcium carbonate characteristically has high opacity and high whiteness, but the calcium carbonate water slurry in the embodiment can prevent the closest packing of calcium carbonate particles to give bulkiness to a coating layer. In addition, the primary particles of the calcium carbonate have an aspect ratio within a predetermined range, and this can improve the glossiness of paper and can reduce the calendering linear pressure to an intended glossiness. The bulkiness further improves the opacity. Considering use of the calcium carbonate water slurry in the embodiment as a coating pigment, it is important that the high-shear viscosity (viscosity at high shear) is 80 mPa/s or less as measured with a rotational viscometer at a rotation rate of 1,100 rpm. Using a calcium carbonate water slurry having a high-shear viscosity of 80 mPa/s or less enables high-speed coating, and thus such a water slurry is preferred.

The water slurry containing the calcium carbonate can be produced by any known method, and the method is not particularly limited. For example, a second embodiment of the present invention is a method for producing a calcium carbonate water slurry. By the method for producing a calcium carbonate water slurry in the second embodiment, the calcium carbonate water slurry in the first embodiment can be produced. The second embodiment is a method for producing a calcium carbonate water slurry. The method comprises the steps of putting water, a grinding medium, and a dispersant into a dispersion device; putting a calcium carbonate into the dispersion device multiple times; stirring the mixture; and wet-grinding the calcium carbonate to give a calcium carbonate water slurry. In the method, the calcium carbonate water slurry is ground until the viscosity of the calcium carbonate water slurry reaches the local minimum value or approximately the local minimum value. In the production method of the embodiment, a calcium carbonate water slurry in which calcium carbonate aggregating due to a strong cohesive power is suspended in water is cracked to give a calcium carbonate water slurry in which calcium carbonate particles having an intended BET specific surface area, an intended aspect ratio, and an intended average particle size are dispersed. In the present description, "cracking" is used to particularly explain that a higher order structure (e.g., aggregate) of a calcium carbonate is broken into lower-order particles, that is, tertiary particles are turned into secondary particles, or secondary particles are turned into primary particles. "Grinding" means that energy is applied to solid particles to reduce the particle size and to create new surfaces. Generally, wet grinding means that a solid such as a powder is added to a solvent together with an optional grinding medium, and a shear force is applied to the mixture to grind or crack the solid. In the present description, reducing the particle size, including "cracking" calcium carbonate particles, may all be called "grinding". When a calcium carbonate water slurry is subjected to wet grinding, particles (secondary particles, tertiary particles, or larger coarse particles) of the calcium carbonate are cracked, and in some cases, primary particles may be ground.

The production method in the embodiment comprises a step of putting water, a grinding medium, and a dispersant into a dispersion device. The dispersion device enables stirring under a strong stirring power with a grinding medium to crack a calcium carbonate aggregating due to a strong cohesive power. As the dispersion device, a Corless mill, an attritor mill, a Keddy mill, a corn mill, a sand grinder, a ball mill, or a similar device may be used. Calcium carbonate can be cracked with such a device alone. To further reduce the particle size of a calcium carbonate, the above device may be used to prepare a high-concentration calcium carbonate water slurry in which the calcium carbonate is cracked to some extent, and then the water slurry may be ground by using a general wet-grinding device such as a multi-pass media stirring grinder, a sand grinder, a high-power grinding rush viscomill, a corn mill, a vibrating mill, and an attritor mill. As the wet-grinding device, various devices such as an ejector device, a venturi device, an obstacle-collision device, a rotating drum device, and a rotating blade device may be used.

Examples of the grinding medium include beads produced from a hard material such as zirconia, glass, ceramics, and alumina. To produce the calcium carbonate having an intended particle size and an intended particle size distribution, a grinding medium having a bead size of 0.1 to 10 mm, preferably 0.5 to 5 mm, may be used. The wet grinding may be performed at a calcium carbonate solid content concentration of 65 to 80%, preferably 70 to 78%. If having an excessively high calcium carbonate solid content concentration, the slurry has a higher viscosity and is difficult to uniformly grind. If the calcium carbonate solid content concentration is excessively low (for example, 10% or less), collision frequency between calcium carbonate particles or between calcium carbonate particles and beads is reduced, and grinding takes longer time. In addition, if the calcium carbonate solid content concentration is, for example, 60% or less, a calcium carbonate slurry suitable for high-speed coating cannot be produced.

The dispersant is not specifically limited, but a polymer dispersant such as a polycarboxylic acid dispersant, a polyacrylic acid dispersant, a naphthalenesulfonic acid-formalin condensate dispersant, and a polyethylene glycol dispersant as well as a general pigment dispersant including a surfactant dispersant such as an alkylsulfonic acid dispersant, a quaternary ammonium dispersant, and a higher alcohol alkylene oxide dispersant may be used singly or in combination. In the method of production in the second embodiment, a polycarboxylic acid dispersant is preferably used. The amount of the dispersant may be an effective amount suitable for the calcium carbonate concentration. In the description, the effective amount means such an amount as not to greatly reduce the grinding efficiency as the viscosity of a calcium carbonate water slurry increases or as not to apply an abnormal load on a dispersion device. Typically, the effective amount means a range of 0.1 to 5.0% by weight relative to the solid content weight of the calcium carbonate in a calcium carbonate water slurry to be wet-ground. If a shortage of the dispersant causes an abnormal increase in viscosity of a calcium carbonate water slurry, a water slurry containing a calcium carbonate having an intended BET specific surface area, an intended volume-based average particle size, and an intended aspect ratio may not be produced. If an excess amount of the dispersant is used, the resulting calcium carbonate water slurry is likely to foam, and which results in poor handling during production or transportation. In addition, the production cost increases, unfortunately. As the dispersant, commercially available polycarboxylic acid dispersants and polyacrylic acid dispersants, such as Aron T series (Toagosei Co., Ltd.), Polity A series (Lion Corporation), and Poiz series (Kao Chemical Corporation), may be used.

The calcium carbonate water slurry in the first embodiment produced by the method of production in the second embodiment contains a dispersant due to the method of production.

The method of production in the embodiment comprises the steps of putting a calcium carbonate into a dispersion device multiple times, stirring the mixture, and wet-grinding the calcium carbonate to give a calcium carbonate water slurry. First, into a dispersion device, a calcium carbonate is put. As described above, calcium carbonate is typically in the form of aggregate in which primary particles strongly aggregate, in many cases. A water slurry of such a calcium carbonate in the aggregate state is cracked to give a calcium carbonate containing almost only the primary particles. Calcium carbonate can be produced, for example, as follows: a water slurry of calcium hydroxide and an aqueous solution containing sodium carbonate are mixed and reacted to give a calcium carbonate water slurry; and then the slurry is subjected to drying or a similar treatment (causticization process). In the process, the calcium hydroxide is a hydroxide of calcium represented by chemical formula $Ca(OH)_2$ and is generally called slaked lime. A water slurry in which calcium hydroxide is suspended in water is generally called lime milk. Meanwhile, sodium carbonate is a carbonate of sodium represented by chemical formula $Na_2CO_3$. As the sodium carbonate, for example, a green liquor generated in a pulp production process in a paper mill may be used. Mixing the calcium hydroxide water slurry and the aqueous sodium carbonate solution may be performed by mixing and stirring a certain amount of the calcium hydroxide water slurry and a certain amount of the aqueous sodium carbonate solution. Alternatively, the mixing may be performed by dropping the aqueous sodium carbonate solution while the calcium hydroxide water slurry is stirred. By mixing both the liquids, causticization proceeds, and calcium carbonate precipitates. Calcium carbonate is a salt of calcium represented by chemical formula $CaCO_3$. Calcium carbonate can also be produced by carbon dioxide process in which calcium carbonate is burnt at a high temperature for decarboxylation to give calcium oxide; next, the calcium oxide is reacted with water to give a calcium hydroxide water slurry; and the calcium hydroxide water slurry is reacted with carbon dioxide. Alternatively, calcium carbonate can be produced by solution process in which an aqueous solution of a soluble calcium salt such as calcium chloride and an aqueous solution of a soluble carbonate such as sodium carbonate are mixed and reacted. The calcium carbonate to be put into the dispersion device and used in the present embodiment is preferably produced specifically by the causticization process.

The calcium carbonate water slurry prepared by any of the above methods can be appropriately filtered and optionally washed with water, and then the residue can be dried with a dryer to give a dry powder of a calcium carbonate. In the process, the dryer may be a general dryer such as a box dryer, a vibration dryer, a drum dryer, a vacuum stirring drier, a rack vacuum dryer, a double cone drier, a vacuum filtration dryer, a band vented dryer, a spray dryer, a rotary dryer, and a flash dryer, and these dryers may be used singly or in combination. The primary particles of the prepared calcium carbonate dry powder may be a calcium carbonate having any crystal form including the calcite crystal form, the aragonite crystal form, and the vaterite crystal form. Calcium carbonate particles may have a spherical shape or a shape such as a nearly cube shape, a spindle shape, an acicular shape, and a rosette shape. The calcium carbonate powder prepared by drying the calcium carbonate water slurry produced by the method of production in the second embodiment is preferably spindle-shaped calcite crystals or acicular aragonite crystals.

In the method of production in the second embodiment, the calcium carbonate to be put into the dispersion device preferably has a volume-based average particle size of 10 μm or less as determined by laser diffraction particle size measurement, and the primary particles of the calcium carbonate preferably have an aspect ratio of 2 to 10 as calculated from image analysis of an electron microscope image. In the description, the volume-based average particle size of a calcium carbonate before wet grinding, as determined by laser diffraction particle size measurement, is the volume-based average particle size of particles including not only the primary particles of the calcium carbonate but also secondary particles, in which the primary particles aggregate, tertiary particles, and coarse particles. In the embodiment, as described above, a calcium carbonate water slurry containing a calcium carbonate in which particles typically aggregate is wet-ground, and thus calcium carbonate particles having an average aggregate particle size of 10 $\mu$m or less can be efficiently cracked. Meanwhile, the primary particles of the calcium carbonate before wet grinding preferably have an aspect ratio of 2 to 10 as calculated from image analysis of an electron microscope image. The aspect ratio is the length-to-width ratio and, for calcium carbonate particles, is the ratio of the major diameter to the minor diameter of a primary particle. In the embodiment, the primary particles of the calcium carbonate before wet grinding preferably have an aspect ratio of 2 to 10, preferably 2.5 to 8, and more preferably 3 to 7, as calculated from image analysis of an electron microscope image.

In the method of production in the second embodiment, the calcium carbonate to be put into the dispersion device has a BET specific surface area of 2 to 14 $m^2/g$, preferably 2.6 to 9.5 $m^2/g$, and more preferably 4 to 8.6 $m^2/g$.

The dry powder of such a calcium carbonate is preferably put into the dispersion device multiple times. If the dry powder of a calcium carbonate is put into a dispersion device at once, the viscosity of a water containing the grinding medium and the dispersant rapidly increases, and the stirring function of the dispersion device may not work properly. Hence, by putting the dry powder of a calcium carbonate into the dispersion device at least two times, the viscosity of the calcium carbonate water slurry containing the grinding medium and the dispersant can be controlled. When the calcium carbonate is put multiple times, it is important that the calcium carbonate powder does not form large masses. The calcium carbonate may be put into the dispersion device such that the calcium carbonate solid content concentration is finally 70% or more, preferably 72% or more, in the calcium carbonate water slurry produced by the method of production in the second embodiment. While the dispersion device is operated, the calcium carbonate is put into the dispersion device. While the dispersion device is continuously operated, the grinding medium, the dispersant, water, and a separate portion of the calcium carbonate are appropriately put, and the whole is stirred for wet-grinding. During the wet-grinding, the whole is preferably stirred such that the integral stirring output (i.e., integral stirring capacity) is 0.5 kW/kg or more. Depending on the used dispersion device, the stirring can be performed such that the integral stirring output is 0.5 kW/kg or more and 20 kW/kg or less and preferably 1 kW/kg or more and 10 kW/kg or less.

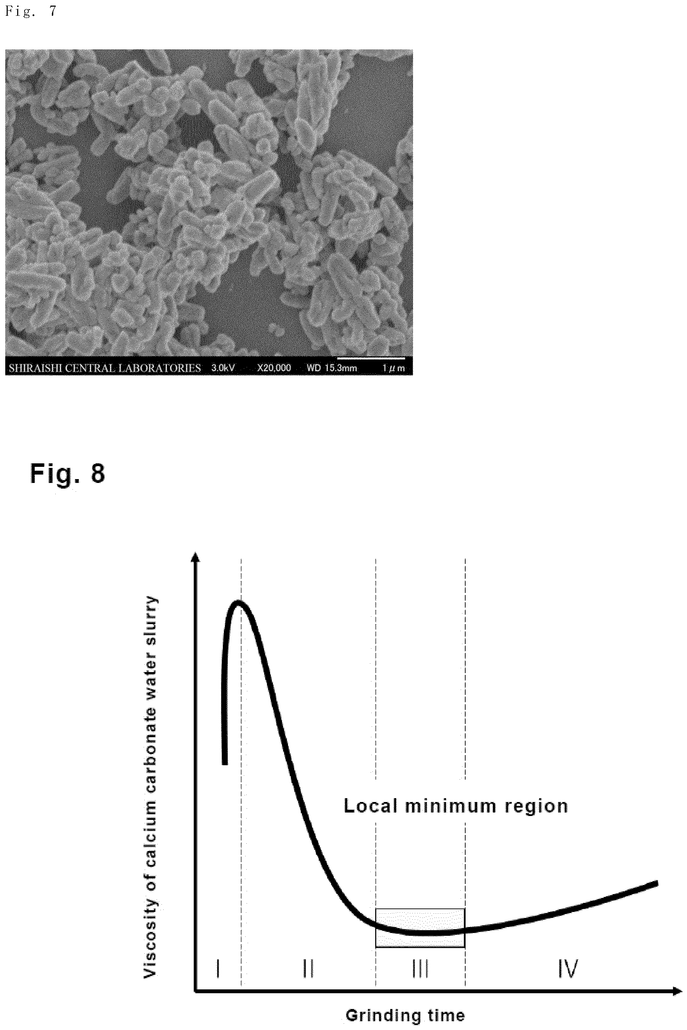

Adjusting the wet grinding time is important to give a calcium carbonate having an intended particle size, an intended particle size distribution, and an intended aspect ratio. The grinding time may also be adjusted depending on the volume of a calcium carbonate water slurry to be ground. Generally, when a grinding curve is plotted where the horizontal axis is the grinding time, and the vertical axis is the viscosity of a calcium carbonate water slurry (see FIG. 8), the viscosity of the calcium carbonate water slurry increases immediately after putting a calcium carbonate into a dispersion device (region I), and the viscosity rapidly drops as wet grinding progresses (region II). When the wet grinding continues, the viscosity of the calcium carbonate water slurry reaches the local minimum value. The viscosity of a calcium carbonate water slurry reaching the local minimum value means the state in which the higher order structures of the calcium carbonate are almost completely cracked, and almost all the calcium carbonate turns into primary particles. When the wet grinding continues even after the viscosity of the calcium carbonate water slurry reaches the local minimum value, the primary particles of the calcium carbonate are ground to form microparticles. In such a condition, the viscosity of the calcium carbonate water slurry is likely to increase. In the embodiment, it is very important that wet grinding continues until the viscosity of the calcium carbonate water slurry reaches the local minimum value or approximately the local minimum value. In the description, approximately the local minimum value of the viscosity of a calcium carbonate water slurry is a value slightly larger than the local minimum value of the viscosity and, for example, means a value at most 10% larger than the local minimum value (absolute value) of the viscosity, preferably a value at most 5% larger, and more preferably a value at most 3% larger. A range including the local minimum value and approximately the local minimum value of the viscosity of a calcium carbonate water slurry is considered as a local minimum region (region III), and the wet grinding time is preferably adjusted such that the viscosity of a calcium carbonate water slurry reaches the local minimum region. By adjusting the grinding time such that the viscosity of a calcium carbonate water slurry reaches the local local minimum region, a calcium carbonate water slurry containing the calcium carbonate having an intended particle size, an intended particle size distribution, and an intended aspect ratio can be produced. If the grinding time is too short, primary particle aggregates of a calcium carbonate are insufficiently cracked. This may increase the Brookfield viscosity of the calcium carbonate water slurry or increase the high-shear viscosity of the slurry (region II). If the grinding time is too long, the primary particles of a calcium carbonate are broken to generate a large amount of microparticles of the calcium carbonate. Accordingly, the viscosity of the calcium carbonate water slurry exceeds approximately the local minimum value (region IV). The calcium carbonate contained in the calcium carbonate water slurry in this region has a lower aspect ratio, which reduces the opacity of the calcium carbonate water slurry and greatly affects the development of glossiness. The appropriate wet grinding time varies with various factors including the volume of the dispersion device and the amount of the calcium carbonate water slurry to be ground. The appropriate wet grinding time can be set by determining the relationship between the viscosity of a calcium carbonate water slurry and the wet grinding time. For example, a small lot is subjected to operation in advance, and the wet grinding time is roughly set. From the calcium carbonate water slurry prepared by wet grinding for an appropriate time, the grinding medium is removed by a known method such as filtration, and an intended calcium carbonate water slurry can be produced.

In the calcium carbonate dissolved and/or dispersed in the calcium carbonate water slurry produced by the method of production in the second embodiment, the primary particles preferably have a BET specific surface area of 3 to 15 m²/g and an aspect ratio of 2 to 10 as calculated from image analysis of an electron microscope image, and the primary particles and/or aggregated particles preferably have a volume-based average particle size of 0.3 to 1 μm as determined by laser diffraction particle size measurement. In particular, the BET specific surface area of the calcium carbonate dissolved and/or dispersed in the calcium carbonate water slurry is 3 to 15 m²/g, preferably 4 to 10 m²/g, and more preferably 6 to 9 m²/g. In other words, the calcium carbonate water slurry is preferably wet-ground such that aggregates of the calcium carbonate before wet grinding are cracked, and the BET specific surface area increases about 1.02 to 1.50 times. The BET specific surface area of the calcium carbonate dissolved or dispersed in a calcium carbonate water slurry can be determined as follows: a certain amount of a sample is sampled from a calcium carbonate water slurry; the sample is filtered and dried by a common procedure to give a calcium carbonate powder; and the powder is subjected to measurement in accordance with Japanese Industrial Standards JIS Z 8830 "Determination of the specific surface area of powders (solids) by gas adsorption-BET method".

The calcium carbonate water slurry produced by the method of production in the second embodiment preferably has a Brookfield viscosity (at a rotation rate of 60 rpm) of 2,000 mPa s or less and a high-shear viscosity (at a rotation rate of 1,100 rpm) of 80 mPa·s or less.

The calcium carbonate dissolved and/or dispersed in the calcium carbonate water slurry has an aspect ratio of 2 to 10, preferably 2.5 to 8, and more preferably 3 to 7. As described above, the primary particles of the calcium carbonate before wet grinding have an aspect ratio of 2 to 10, preferably 2.5 to 8, and more preferably 3 to 7, as calculated from image analysis of an electron microscope image. A calcium carbonate water slurry containing calcium carbonate primary particles having such an aspect ratio is preferably wet-ground as described above to give an aspect ratio of 2 to 10, preferably 2.5 to 8, and more preferably 3 to 7. This means that the wet-grinding causes almost no change in the aspect ratio of calcium carbonate primary particles. Almost no change in the aspect ratio of calcium carbonate primary particles means that calcium carbonate primary particles are hardly ground in the wet-grinding. In other words, the wet-grinding a calcium carbonate water slurry in the embodiment is characterized in that aggregates such as secondary particles and tertiary particles of the calcium carbonate are cracked, but primary particles are hardly ground. If the calcium carbonate contained in the calcium carbonate water slurry produced in the embodiment has an excessively large aspect ratio, the glossiness of a coated paper or the flowability of the calcium carbonate water slurry may be impaired. If the calcium carbonate has an excessively small aspect ratio, the calcium carbonate particles in a coated paper have a fewer facet faces, which contribute to the reflection of visible light, and accordingly the opacity or the glossiness of a coated paper may be reduced. When the calcium carbonate particles particularly have an aspect ratio of 3 or more, the viscosity of the calcium carbonate water slurry can be reduced, and this can increase the calcium carbonate solid content concentration of the calcium carbonate water slurry, for example, to 70% by weight or more, preferably 72% by weight or more. The calcium carbonate contained in the calcium carbonate water slurry produced in the embodiment has a minor diameter of 0.05 to 1 μm, preferably about 0.1 to 0.5 μm. Calculating the aspect ratio from image analysis of an electron microscope image means that an image of a calcium carbonate observed under an electron microscope is analyzed by using image analysis software or the like to determine the aspect ratio of a particle. Depending on the image analysis software used for analysis, typically, the major diameters and the minor diameters of a certain number of (for example, 300 or more) particles are measured to determine the aspect ratios; and the average is calculated to give the aspect ratio of the calcium carbonate. The calcium carbonate contained in the calcium carbonate water slurry produced in the embodiment has a volume-based average particle size of 0.3 to 1 μm and preferably 0.5 to 0.8 μm. If the calcium carbonate contained in the calcium carbonate water slurry produced in the embodiment has an excessively large volume-based average particle size, aggregate cracking is insufficient. Accordingly, the glossiness of a coated paper may be impaired, or aggregated particles may generate streaks during high-speed coating. A calcium carbonate having an excessively small volume-based average particle size indicates what is called excess grinding, and the particle shape cannot be maintained. In addition, microparticles cause closest packing of calcium carbonate on a coated face, and the opacity or the glossiness of the coated paper is reduced.

The calcium carbonate contained in the calcium carbonate water slurry produced in the embodiment preferably has a volume-based particle size distribution width of 5 or less as determined by laser diffraction particle size measurement. In the description, the volume-based particle size distribution width of a calcium carbonate as determined by laser diffraction particle size measurement is the value calculated in accordance with the equation:

particle size distribution width = ([D90 value of calcium carbonate]-[D10 value of calcium carbonate])/volume-based avrage particle size of calcium carbonate as determined by laser diffraction particle size measurement          [Mathematical Equation 2]

(where D90 value is the particle size of a calcium carbonate at a cumulative volume of 90% in a volume-based particle size cumulative distribution as determined by laser diffraction particle size measurement; and D10 value is the particle size of the calcium carbonate at a cumulative volume of 10% in the volume-based particle size cumulative distribution as determined by laser diffraction particle size measurement). A volume-based particle size distribution width of 5 or less means that the calcium carbonate water slurry produced in the embodiment contains almost no calcium carbonate aggregate.

The calcium carbonate water slurry in the first embodiment and the calcium carbonate water slurry produced by the method of production in the second embodiment can be used as the pigment for a coated paper and can also be used as the pigment for a paint. When used as the paint pigment, the calcium carbonate water slurry may be used in combination with one or more of typically used inorganic pigments such as heavy (ground) calcium carbonate, precipitated calcium carbonate, kaolin, clay, delaminated clay, talc, satin white, silica, barium sulfate, calcium sulfate, zinc oxide, and titanium dioxide and organic pigments such as a plastic pigment.

In the present description, % and part mean % by weight and part by weight, respectively, and a numerical range includes the endpoints, unless otherwise stated. In the present invention and the embodiments of the present invention, a "calcium carbonate" simply described means precipitated calcium carbonate, that is, synthetic calcium carbonate, unless otherwise specified.

Examples

<Synthesis of calcium carbonate water slurry>

[Example 1]

While a calcium hydroxide water slurry having a solid content concentration of 13.2% was stirred, an aqueous sodium carbonate solution at a concentration of 14.8% was added at a temperature of 50°C over 2 hours, and the whole was mixed and stirred to give a water slurry containing a calcium carbonate. The resulting calcium carbonate was observed under an electron microscope and has a spindle shape. The resulting calcium carbonate water slurry was filtered, washed, and then was dried in a constant temperature drier at 105°C.

In a Corless type disperser, 3-mm glass beads, water, and 1.0 part of a dispersant (a polycarboxylic acid dispersant, trade name: Aron T-50, TOAGOSEI CO., LTD.) were placed, and then 100 parts of the dried calcium carbonate (an aspect ratio of 5.1, a volume-based average particle size of 1.4 $\mu$m, calcite crystals) was added in small portions to give a calcium carbonate water slurry having a calcium carbonate solid content concentration of 72% (wet grinding conditions: 500 g of calcium carbonate powder, a slurry having a solid content of 70%, 300 g of glass beads, a stirring rate of 525 rpm, a wet grinding time of 2 hours). From the calcium carbonate water slurry after wet grinding, 10 g of the slurry was sampled, and ethanol was added so as to give slurry:ethanol = 1 : 9 (weight ratio). The whole was stirred to be substantially homogeneous and was subjected to suction filtration through a filter paper (ADVANTEC qualitative filter paper, No. 2). The residue on the filter paper was next dried in an oven at 105°C for 1 hour to give 7 g of a calcium carbonate powder. The calcium carbonate powder was placed in a cell for specific surface area measurement and was pretreated in a nitrogen gas atmosphere at 110°C for 40 minutes. The pretreated powder was next degassed at 110°C for 20 minutes, and the BET specific surface area was determined (8.7 m$^2$/g). The volume-based average particle size of the calcium carbonate contained in the calcium carbonate water slurry was determined to be 0.6 $\mu$m by subjecting the calcium carbonate water slurry to laser diffractometry with MASTERSIZER 3000 manufactured by Malvern. As for the aspect ratio of the calcium carbonate contained in the calcium carbonate water slurry, an electron micrograph of the calcium carbonate water slurry was recorded, and the image was analyzed to reveal a spindle shape having an aspect ratio of 3.2.

[Example 2]

A calcium carbonate water slurry was produced in the same manner as in Example 1 except that the solid content concentration of the calcium hydroxide water slurry was 15.0%. The resulting calcium carbonate water slurry was dried and observed under an electron microscope, which revealed an acicular shape (having an aspect ratio of 6.2). The dried calcium carbonate was wet-ground in the same conditions as in Example 1 to give a calcium carbonate water slurry. The calcium carbonate contained in the calcium carbonate water slurry after wet grinding had a BET specific surface area of 4.5 m$^2$/g, a volume-based average particle size (as determined by laser diffraction particle size measurement) of 0.6 $\mu$m, and an aspect ratio of 4.8 calculated from an electron microscope image and had an acicular shape.

[Example 3]

A calcium carbonate water slurry was produced in the same manner as in Example 1 except that the temperature of the aqueous sodium carbonate solution was 70°C. The resulting calcium carbonate water slurry was dried and observed under an electron microscope, which revealed an acicular shape (having an aspect ratio of 11.5 and a volume-based average particle size of 6.9 $\mu$m). The dried calcium carbonate was wet-ground in the same conditions as in Example 1 to give a calcium carbonate water slurry. The calcium carbonate contained in the calcium carbonate water slurry after wet grinding had a BET specific surface area of 3.5 m$^2$/g, a volume-based average particle size (as determined by laser diffraction particle size measurement) of 0.8 $\mu$m, and an aspect ratio of 9.2 calculated from an electron microscope image and had an acicular shape.

[Example 4]

A calcium carbonate was synthesized by a carbon dioxide process (in which the temperature of a calcium hydroxide at a solid content concentration of 10% was adjusted at 23°C before reaction, and carbon dioxide gas was introduced thereto). The resulting calcium carbonate water slurry was observed under an electron microscope, which revealed spindle-shaped particles (having an aspect ratio of 4.9 and a volume-based average particle size of 3.2 $\mu$m). The calcium carbonate water slurry was filtered and dried. The dried calcium carbonate was wet-ground in the same manner as in Example 1 to give a calcium carbonate water slurry. The calcium carbonate contained in the calcium carbonate water slurry after wet grinding had a BET specific surface area of 8.6 m$^2$/g, a volume-based average particle size (as determined by laser diffraction particle size measurement) of 0.6 $\mu$m, and an aspect ratio of 3.5 calculated from an electron microscope image and maintained the spindle shape.

[Example 5]

A dried calcium carbonate was prepared in the same manner as in Example 1. A calcium carbonate water slurry was produced in the same manner as in Example 1 except that the wet grinding time was 4 hours. The calcium carbonate contained in the calcium carbonate water slurry after wet grinding had a BET specific surface area of 9.3 m$^2$/g, a volume-based average particle size (as determined by laser diffraction particle size measurement) of 0.5 $\mu$m, and an aspect ratio of 2.5 calculated from an electron microscope image and had a spindle shape.

[Example 6]

A dried calcium carbonate was prepared in the same manner as in Example 1. A calcium carbonate water slurry was produced in the same manner as in Example 1 except that the wet grinding time was 6 hours. The calcium carbonate contained in the calcium carbonate water slurry after wet grinding had a BET specific surface area of 9.1 m$^2$/g, a volume-based average particle size (as determined by laser diffraction particle size measurement) of 0.5 $\mu$m, and an aspect ratio of 2.1 calculated from an electron microscope image and had a spindle shape.

[Example 7]

A dried calcium carbonate was prepared in the same manner as in Example 1. A calcium carbonate water slurry was produced in the same manner as in Example 1 except that 2.0 parts of a polycarboxylic acid dispersant (trade name: Aron T-50, TOAGOSEI CO., LTD.) was added as the dispersant. The calcium carbonate contained in the calcium carbonate water slurry after wet grinding had a BET specific surface area of 8.7 m$^2$/g, a volume-based average particle size (as determined by laser diffraction particle size measurement) of 0.6 $\mu$m, and an aspect ratio of 3.4 calculated from an electron microscope image and had a spindle shape.

[Example 8]

A dried calcium carbonate was prepared in the same manner as in Example 1. A calcium carbonate water slurry was produced in the same manner as in Example 1 except that 1.0 part of a polyacrylic acid dispersant (trade name: POISE 530, Kao Chemical Corporation) was added as the dispersant. The calcium carbonate contained in the calcium carbonate water slurry after wet grinding had a BET specific surface area of 8.8 m$^2$/g, a volume-based average particle size (as determined by laser diffraction particle size measurement) of 0.6 μm, and an aspect ratio of 3.3 calculated from an electron microscope image and had a spindle shape.

[Example 9]

A dried calcium carbonate was prepared in the same manner as in Example 1. A calcium carbonate water slurry was produced in the same manner as in Example 1 except that 1.0 part of a polycarboxylic acid dispersant (trade name: Polity A-300, Lion Corporation) was added as the dispersant. The calcium carbonate contained in the calcium carbonate water slurry after wet grinding had a BET specific surface area of 8.8 $m^2$/g, a volume-based average particle size (as determined by laser diffraction particle size measurement) of 0.6 μm, and an aspect ratio of 3.3 calculated from an electron microscope image and had a spindle shape.

[Comparative Example 1]

A commercially available wet-ground heavy calcium carbonate (SETACARB-HG, BIHOKU FUNKA KOGYO CO., LTD.) was prepared and was revealed to be ununinform by observation under an electron microscope. The calcium carbonate (having an aspect ratio of 1.5) was wet-ground in the same manner as in Example 1 to give a calcium carbonate water slurry. The calcium carbonate contained in the calcium carbonate water slurry after wet grinding had a BET specific surface area of 9.5 $m^2$/g, a volume-based average particle size (as determined by laser diffraction particle size measurement) of 0.7 μm, and an aspect ratio of 1.2 calculated from an electron microscope image.

[Comparative Example 2]

A calcium carbonate water slurry was produced in the same manner as in Example 1 except that an aqueous sodium carbonate solution was added to a calcium hydroxide water slurry over 10 minutes. The resulting calcium carbonate was observed under an electron microscope, which revealed aggregated particles including cubic particles. The calcium carbonate (having an aspect ratio of 1.3) was wet-ground in the same manner as in Example 1 to give a calcium carbonate water slurry. The calcium carbonate contained in the calcium carbonate water slurry after wet grinding had a BET specific surface area of 16.1 $m^2$/g, a volume-based average particle size (as determined by laser diffraction particle size measurement) of 2.3 μm, and an aspect ratio of 1.1 calculated from an electron microscope image.

[Comparative Example 3]

A calcium carbonate water slurry was produced in the same manner as in Example 1 except that the grinding time was 8 hours in the wet grinding conditions. The calcium carbonate contained in the calcium carbonate water slurry after wet grinding had a BET specific surface area of 10.5 $m^2$/g, a volume-based average particle size (as determined by laser diffraction particle size measurement) of 0.4 μm, and an aspect ratio of 1.8 calculated from an electron microscope image.

[Comparative Example 4]

A calcium carbonate water slurry was produced in the same manner as in Example 1 except that the wet grinding time was 30 minutes. The calcium carbonate contained in the calcium carbonate water slurry after wet grinding had a BET specific surface area of 9.9 $m^2$/g, a volume-based average particle size (as determined by laser diffraction particle size measurement) of 1.2 μm, and an aspect ratio of 4.0 calculated from an electron microscope image. The calcium carbonate water slurry had a Brookfield viscosity (at a rotation rate of 60 rpm) of 3,000 mPa s and a high-shear viscosity (at a rotation rate of 1,100 rpm) of 100 mPa·s.

[Comparative Example 5]

The spindle-shaped particles prepared by the carbon dioxide process in Example 4 was wet-ground without any grinding medium. The produced calcium carbonate water slurry had no viscosity in a measurable region, and the calcium carbonate contained in the slurry was in the state of masses.

[Comparative Example 6]

To the spindle-shaped particles prepared by the carbon dioxide process in Example 4, water was added such that the solid content concentration was 70% by weight, and the whole was wet-ground by using 300 g of 0.5-mm ceramic beads for 1 hour. The resulting calcium carbonate water slurry was further wet-ground by using a DYNO-MILL for 1 hour.

[Comparative Example 7]

A calcium carbonate water slurry was produced in the same manner as in Example 1 except that the wet grinding time was 1 hour. The calcium carbonate contained in the calcium carbonate water slurry after wet grinding had a BET specific surface area of 9.5 m$^2$/g, a volume-based average particle size (as determined by laser diffraction particle size measurement) of 0.9 $\mu$m, and an aspect ratio of 3.9 calculated from an electron microscope image. The calcium carbonate water slurry had a Brookfield viscosity (at a rotation rate of 60 rpm) of 2,200 mPa s and a high-shear viscosity (at a rotation rate of 1,100 rpm) of 85 mPa·s.

[Comparative Example 8]

A calcium carbonate water slurry was produced in the same manner as in Example 1 except that 0.1 parts of a polycarboxylic acid dispersant (trade name: Aron T-50, TOAGOSEI CO., LTD.) was added as the dispersant. The calcium carbonate contained in the calcium carbonate water slurry after wet grinding had a BET specific surface area of 8.8 m$^2$/g, a volume-based average particle size (as determined by laser diffraction particle size measurement) of 0.5 $\mu$m, and an aspect ratio of 3.3 calculated from an electron microscope image. The calcium carbonate water slurry had a Brookfield viscosity (at a rotation rate of 60 rpm) of 2,500 mPa·s and a high-shear viscosity (at a rotation rate of 1,100 rpm) of 100 mPa·s.

[Comparative Example 9]

A calcium carbonate water slurry was produced in the same manner as in Example 1 except that 10 parts of a polycarboxylic acid dispersant (trade name: Aron T-50, TOAGOSEI CO., LTD.) was added as the dispersant. The calcium carbonate contained in the calcium carbonate water slurry after wet grinding had a BET specific surface area of 8.7 m$^2$/g, a volume-based average particle size (as determined by laser diffraction particle size measurement) of 0.6 $\mu$m, and an aspect ratio of 3.4 calculated from an electron microscope image. The calcium carbonate water slurry had a Brookfield viscosity (at a rotation rate of 60 rpm) of 200 mPa·s and a high-shear viscosity (at a rotation rate of 1,100 rpm) of 45 mPa·s.

[Comparative Example 10]

A calcium carbonate water slurry was produced in the same manner as in Example 1 except that 0.1 parts of a polycarboxylic acid dispersant (trade name: POISE 530, Kao Chemical Corporation) was added as the dispersant. The calcium carbonate contained in the calcium carbonate water slurry after wet grinding had a BET specific surface area of 8.7 m$^2$/g, a volume-based average particle size (as determined by laser diffraction particle size measurement) of 0.6 $\mu$m, and an aspect ratio of 3.2 calculated from an electron microscope image. The calcium carbonate water slurry had a Brookfield viscosity (at a rotation rate of 60 rpm) of 2,300 mPa s and a high-shear viscosity (at a rotation rate of 1,100 rpm) of 120 mPa·s.

[Comparative Example 11]

A calcium carbonate water slurry was produced in the same manner as in Example 1 except that 10 parts of a polycarboxylic acid dispersant (trade name: POISE 530, Kao Chemical Corporation) was added as the dispersant. The calcium carbonate contained in the calcium carbonate water slurry after wet grinding had a BET specific surface area of 8.7 m$^2$/g, a volume-based average particle size (as determined by laser diffraction particle size measurement) of 0.5 $\mu$m, and an aspect ratio of 3.3 calculated from an electron microscope image. The calcium carbonate water slurry had a Brookfield viscosity (at a rotation rate of 60 rpm) of 220 mPa·s and a high-shear viscosity (at a rotation rate of 1,100 rpm) of 45 mPa·s.

[Comparative Example 12]

A calcium carbonate water slurry was produced in the same manner as in Example 1 except that 0.1 parts of a polycarboxylic acid dispersant (trade name: Polity A-300, Lion Corporation) was added as the dispersant. The calcium carbonate contained in the calcium carbonate water slurry after wet grinding had a BET specific surface area of 8.7 m$^2$/g, a volume-based average particle size (as determined by laser diffraction particle size measurement) of 0.6 $\mu$m, and an aspect ratio of 3.4 calculated from an electron microscope image. The calcium carbonate water slurry had a Brookfield viscosity (at a rotation rate of 60 rpm) of 2,200 mPa s and a high-shear viscosity (at a rotation rate of 1,100 rpm) of 120 mPa·s.

[Comparative Example 13]

A calcium carbonate water slurry was produced in the same manner as in Example 1 except that 10 parts of a polycarboxylic acid dispersant (trade name: Polity A-300, Lion Corporation) was added as the dispersant. The calcium carbonate contained in the calcium carbonate water slurry after wet grinding had a BET specific surface area of 8.7 $m^2/g$, a volume-based average particle size (as determined by laser diffraction particle size measurement) of 0.5 μm, and an aspect ratio of 3.2 calculated from an electron microscope image. The calcium carbonate water slurry had a Brookfield viscosity (at a rotation rate of 60 rpm) of 120 mPa·s and a high-shear viscosity (at a rotation rate of 1,100 rpm) of 40 mPa·s.

<Preparation of coated paper>

Relative to 100 parts of the solid content of the calcium carbonate contained in each calcium carbonate water slurry produced in Examples and Comparative Examples, 13 parts of a styrene-butadiene copolymer latex (trade name: SN-307, NIPPON A&L INC.) and 3 parts of a phosphate-esterified starch (trade name: Nisshoku MS#4600, NIHON SHOKUHIN KAKO CO., LTD.) were added as adhesives to give a coating liquid having a solid content concentration of 65%. The prepared coating liquid was applied onto one face of a base paper (Kinbishi: Mitsubishi Paper Mills Limited) having a basis weight of 78 $g/m^2$, with a bar blade coater at 12 $g/m^2$. The treated base paper was subjected to supercalendering at a linear pressure of 60 kg/cm to give a coated paper.

<Evaluation of coated paper>

[White paper glossiness]

The white paper glossiness of a coated paper was determined in accordance with Japanese Industrial Standards JIS P-8142 (Paper and board-Measurement of 75° specular gloss-Converging beam method).

[Printing glossiness of coated paper]

Printing was performed on each coated paper by using a constant ink volume of 0.4 mL of TK NEX SUMI manufactured by Toyo Ink with a printability tester, RI tester. The glossiness of the printed coated paper was determined with a gloss meter (GM-26D, MURAKAMI COLOR RESEARCH LABORATORY) at an angle of 75 degrees.

[Opacity of coated paper]

Measurement was performed in accordance with Japanese Industrial Standards JIS-P-8138 (Testing method for opacity of paper).
The evaluation results in Examples and Comparative Examples are shown in Table 1.

[Table 1]

[Table 1] Properties of calcium carbonate and evaluation of coated paper (Examples and Comparative Examples)

| | | unit | Example 1 | Example 2 | Example 3 | Example 4 | Comparative Example 1 | Comparative Example 2 |
|---|---|---|---|---|---|---|---|---|
| Material calcium carbonate | production process | | causticization process | causticization process | causticization process | carbon dioxide process | grinding process | causticization process |
| | average particle size | μm | 1.4 | 1.6 | 6.9 | 3.2 | 5.6 | 12 |
| | aspect ratio | - | 5.1 | 6.2 | 11.5 | 4.9 | 1.5 | 1.3 |
| | crystal system particle shape | | calcite spindle | aragonite acicular | aragonite acicular | calcite spindle | calcite spindle | aragonite acicular |
| Dispersant | product name | | Aron T-50 | Aron T-50 | Aron T-50 | Aron T-50 | Aron T-50 | Aron T-50 |
| | amount | part by weight | 1 | 1 | 1 | 1 | 1 | 1 |
| Wet grinding | beads (diameter) | | glass (3 mm) | glass (3 mm) | glass (3 mm) | glass (3 mm) | glass (3 mm) | glass (3 mm) |
| | disperser | | Corless | Corless | Corless | Corless | Corless | Corless |
| | wet grinding time | hour | 2 | 2 | 2 | 2 | 2 | 2 |
| | integral stirring output | kW/W% | 1.5 | 1.5 | 1.5 | 1.5 | 1.5 | 1.5 |
| Resulting calcium carbonate | BET specific surface area | m²/g | 8.7 | 4.5 | 3.5 | 8.6 | 9.5 | 16.1 |
| | average particle size | μm | 0.6 | 0.6 | 0.8 | 0.6 | 0.7 | 2.3 |
| | aspect ratio | - | 3.2 | 4.8 | 9.2 | 3.5 | 1.2 | 1.1 |
| | particle shape | | spindle | acicular | acicular | spindle | amorphous | acicular |
| | Brookfield viscosity of water slurry | mPa·s | 800 | 150 | 120 | 700 | 200 | 250 |
| | high-shear viscosity of water slurry | mPa·s | 65 | 12 | 11 | 44 | 15 | 14 |
| | distribution width | | 3.7 | 1.7 | 4.5 | 4.1 | 7.4 | 8.3 |

(continued)

| [Table 1] Properties of calcium carbonate and evaluation of coated paper (Examples and Comparative Examples) | | | | | | | | |
|---|---|---|---|---|---|---|---|---|
| | | unit | Example 1 | Example 2 | Example 3 | Example 4 | Comparative Example 1 | Comparative Example 2 |
| Coated paper evaluation | white paper glossiness | % | 55 | 53 | 52 | 54 | 551 | 40 |
| | printing glossiness | % | 87 | 84 | 85 | 84 | 78 | 65 |
| | opacity | % | 91 | 91 | 92 | 91 | 86 | 87 |

[Table 2]

| [Table 2] Stirring conditions, properties of calcium carbonate, and evaluation of coated paper (Examples and Comparative Examples) | | | | | | | | | | |
|---|---|---|---|---|---|---|---|---|---|---|
| | | unit | Example 1 | Example 5 | Example 6 | Comparative Example 3 | Comparative Example 4 | Comparative Example 5 | Comparative Example 6 | Comparative Example 7 |
| Material calcium carbonate | production process | | causticization process | causticization process | causticization process | causticization process | causticization process | carbon dioxide process | carbon dioxide process | causticization process |
| | average particle size | μm | 1.4 | 1.4 | 1.4 | 1.4 | 1.4 | 3.2 | 3.2 | 1.4 |
| | aspect ratio | - | 5.1 | 5.1 | 5.1 | 5.1 | 5.1 | 4.9 | 4.9 | 5.1 |
| | crystal system particle shape | | calcite spindle | calcite spindle | calcite spindle | calcite spindle | calcite spindle | calcite spindle | calcite spindle | calcite spindle |
| Dispersant | product name | | Aron T-50 | Aron T-50 | Aron T-50 | Aron T-50 | Aron T-50 | Aron T-50 | Aron T-50 | Aron T-50 |
| | amount | part by weight | 1 | 1 | 1 | 1 | 1 | 1 | 1 | 1 |
| Wet grinding | beads (diameter) | | glass (3 mm) | glass (3 mm) | glass (3 mm) | glass (3 mm) | glass (3 mm) | without | ceramic (0.5 mm) | glass (3 mm) |
| | disperser | | Corless | Corless | Corless | Corless | Corless | Corless | Corless + DYNO-MILL | Corless |
| | wet grinding time | hour | 2 | 4 | 6 | 8 | 0.5 | 2 | 2 | 1 |
| | integral stirring output | kW/W % | 1.5 | 3 | 4.5 | 6 | 0.4 | 1.5 | 2.2 | 0.8 |
| Resulting calcium | BET specific surface area | m²/g | 8.7 | 9.3 | 9.1 | 10.5 | 9.9 | 8.6 | 8.6 | 9.5 |

(continued)

| | | unit | Example 1 | Example 5 | Example 6 | Comparative Example 3 | Comparative Example 4 | Comparative Example 5 | Comparative Example 6 | Comparative Example 7 |
|---|---|---|---|---|---|---|---|---|---|---|
| carbonate | average particle size | μm | 0.6 | 0.5 | 0.5 | 0.4 | 1.2 | not measurable | 0.6 | 0.9 |
| | aspect ratio | - | 3.2 | 2.5 | 2.1 | 1.8 | 4.0 | not measurable | 2.5 | 3.9 |
| | particle shape | | spindle | acicular | spindle | spindle | spindle | spindle | spindle | spindle |
| | Brookfield viscosity of water slurry | mPa·s | 800 | 150 | 120 | 2300 | 3000 | not measurable | 2200 | 2200 |
| | high-shear viscosity of water slurry | mPa·s | 65 | 12 | 11 | 85 | 100 | not measurable | 95 | 82 |
| | distribution width | - | 3.7 | 1.7 | 4.5 | 4.5 | 5.5 | not measurable | 8.1 | 5.5 |
| Coated paper evaluation | white paper glossiness | % | 55 | 53 | 52 | 50 | 54 | not coatable | 39 | 54 |
| | printing glossiness | % | 87 | 84 | 85 | 79 | 83 | not coatable | 62 | 83 |
| | opacity | % | 91 | 91 | 92 | 88 | 88 | not coatable | 86 | 88 |
| Remarks | correspondence to FIG. 8 | | III | III | III | IV | I | I | IV | II |

[Table 2] Stirring conditions, properties of calcium carbonate, and evaluation of coated paper (Examples and Comparative Examples)

EP 4 424 640 A1

18

[Table 3]

| [Table 3] Dispersant, properties of calcium carbonate, and evaluation of coated paper (Examples) | | | | | | |
|---|---|---|---|---|---|---|
| | | unit | Example 1 | Example 7 | Example 8 | Example 9 |
| Material calcium carbonate | production process | | causticization process | causticization process | causticization process | causticization process |
| | average particle size | μm | 1.4 | 1.4 | 1.4 | 1.4 |
| | aspect ratio | - | 5.1 | 5.1 | 5.1 | 5.1 |
| | crystal system particle shape | | calcite spindle | calcite spindle | calcite spindle | calcite spindle |
| Dispersant | product name | | Aron T-50 | Aron T-50 | POISE 530 | Polity A-300 |
| | amount | parts by weight | 1 | 2 | 1 | 1 |
| Wet grinding | beads (diameter) | | glass (3 mm) | glass (3 mm) | glass (3 mm) | glass (3 mm) |
| | disperser | | Corless | Corless | Corless | Corless |
| | wet grinding time | hour | 2 | 2 | 2 | 2 |
| | integral stirring output | kW/w% | 1.5 | 3 | 4.5 | 1.5 |
| Resulting calcium carbonate | BET specific surface area | $m^2/g$ | 8.7 | 8.7 | 8.8 | 8.8 |
| | average particle size | μm | 0.6 | 0.6 | 0.6 | 0.6 |
| | aspect ratio | - | 3.2 | 2.5 | 3.3 | 3.3 |
| | particle shape | | spindle | spindle | spindle | spindle |
| | Brookfield viscosity of water slurry | mPa·s | 800 | 120 | 300 | 440 |
| | high-shear viscosity of water slurry | mPa·s | 65 | 40 | 55 | 60 |
| | distribution width | - | 3.7 | 3.2 | 3.5 | 3.8 |
| Coated paper evaluation | white paper glossiness | % | 55 | 56 | 51 | 55 |
| | printing glossiness | % | 87 | 88 | 80 | 89 |
| | opacity | % | 91 | 90 | 92 | 92 |
| Remarks | slurry evaluation | | good | good | good | good |

[Table 4]

| | | unit | Example 1 | Comparative Example 8 | Comparative Example 9 | Comparative Example 10 | Comparative Example 11 | Comparative Example 12 | Comparative Example 13 |
|---|---|---|---|---|---|---|---|---|---|
| Material calcium carbonate | production process | | causticization process | causticization process | causticization process | causticization process | causticization process | causticization process | causticization process |
| | average particle size | μm | 1.4 | 1.4 | 1.4 | 1.4 | 1.4 | 1.4 | 1.4 |
| | aspect ratio | - | 5.1 | 5.1 | 5.1 | 5.1 | 5.1 | 5.1 | 5.1 |
| | crystal system particle shape | | calcite spindle | calcite spindle | calcite spindle | calcite spindle | calcite spindle | calcite spindle | calcite spindle |
| Dispersant | product name | | Aron T-50 | Aron T-50 | Aron T-50 | POISE 530 | POISE 530 | Polity A-300 | Polity A-300 |
| | amount | part by weight | 1 | 0.1 | 10 | 0.1 | 10 | 0.1 | 10 |
| Wet grinding | beads (diameter) | | glass (3 mm) | glass (3 mm) | glass (3 mm) | glass (3 mm) | glass (3 mm) | glass (3 mm) | glass (3 mm) |
| | disperser | | Corless | Corless | Corless | Corless | Corless | Corless | Corless |
| | wet grinding time | hour | 2 | 2 | 2 | 2 | 2 | 2 | 2 |
| | integral stirring output | kW/W % | 1.5 | 1.5 | 1.5 | 1.5 | 1.5 | 1.5 | 1.5 |
| Resulting calcium carbonate | BET specific surface area | m²/g | 8.7 | 8.8 | 8.7 | 8.7 | 8.7 | 8.7 | 8.7 |
| | average particle size | μm | 0.6 | 0.5 | 0.6 | 0.6 | 0.5 | 0.6 | 0.5 |
| | aspect ratio | - | 3.2 | 3.3 | 3.4 | 3.2 | 3.3 | 3.4 | 3.2 |
| | particle shape | | spindle | spindle | spindle | spindle | spindle | spindle | spindle |

[Table 4] Dispersant, properties of calcium carbonate, and evaluation of coated paper (Comparative Examples)

(continued)

| [Table 4] Dispersant, properties of calcium carbonate, and evaluation of coated paper (Comparative Examples) | | | | | | | | | |
|---|---|---|---|---|---|---|---|---|---|
| | | unit | Example 1 | Comparative Example 8 | Comparative Example 9 | Comparative Example 10 | Comparative Example 11 | Comparative Example 12 | Comparative Example 13 |
| | Brookfield viscosity of water slurry | mPa·s | 800 | 2500 | 200 | 2300 | 220 | 2200 | 120 |
| | high-shear viscosity of water slurry | mPa·s | 65 | 100 | 45 | 120 | 45 | 120 | 40 |
| | distribution width | - | 3.7 | 5.2 | 3.0 | 3.8 | 3.1 | 5.2 | 3.2 |
| Coated paper evaluation | white paper glossiness | % | 55 | 50 | 53 | 56 | 53 | 51 | 52 |
| | printing glossiness | % | 87 | 79 | 89 | 81 | 88 | 80 | 88 |
| | opacity | % | 91 | 87 | 90 | 90 | 93 | 86 | 91 |
| Remarks | slurry evaluation | | good | poor | poor (foaming) | poor | poor (foaming) | poor | poor (foaming) |

In Tables, "average particle size" and "aspect ratio" of material calcium carbonate were determined by measuring the calcium carbonate contained in a calcium carbonate water slurry before wet grinding. "BET specific surface area", "average particle size", and "aspect ratio" of resulting calcium carbonate were determined by measuring the calcium carbonate contained in a calcium carbonate water slurry after wet grinding. The above values were determined by the following measurement methods. "Brookfield viscosity of water slurry" indicates the viscosity of a calcium carbonate water slurry after wet grinding determined by using a rotational viscometer (Toki Sangyo, BII viscometer) at a rotation rate of 60 rpm. "High-shear viscosity of water slurry" indicates the viscosity of a calcium carbonate water slurry after wet grinding determined by using a rotational viscometer (Hercules high-shear viscometer DV-10) at a rotation rate of 1,100 rpm. "Distribution width" indicates the value calculated in accordance with the equation:

particle size distribution width = ([D90 value of calcium carbonate] - [D10 value of calcium carbonate])/volume-based average particle size of calcium carbonate as determined by laser diffraction particle size measurement.

In Table 2, "correspondence to FIG. 8" indicates a region in FIG. 8 in which the viscosity of a calcium carbonate water slurry produced by any method in Examples and Comparative Examples is. In "slurry evaluation" in Table 3 and Table 4, a calcium carbonate water slurry produced by any method in Examples and Comparative Examples was evaluated as "good" when the viscosity (Brookfield viscosity or high-shear viscosity) of the water slurry fell within the scope of the invention and no foaming or the like was observed in the whole water slurry, whereas a water slurry was evaluated as "poor" when the viscosity of the water slurry did not fall within the scope of the invention or foaming or the like was observed in the whole water slurry.

Using the calcium carbonate water slurry produced in Examples of the present invention as a coating liquid enabled the production of a coated paper having a high white paper glossiness, a high printing glossiness, and a high opacity. The calcium carbonate contained in the calcium carbonate water slurry in Comparative Example 1 had a small aspect ratio, and the coated paper prepared by using the slurry had a lower white paper glossiness, a lower printing glossiness, and a lower opacity. The calcium carbonate contained in the calcium carbonate water slurry in Comparative Example 2 had a BET specific surface area, a volume-based average particle size, and an aspect ratio that each failed to fall within the scope of the invention, and the coated paper prepared by using the slurry had a lower white paper glossiness, a lower printing glossiness, and a lower opacity.

The calcium carbonate water slurry in Comparative Example 3, in which the BET specific surface area and the volume-based average particle size fell within the scope of the invention but the aspect ratio did not fall within the scope of the invention, had high viscosities. The coated paper prepared by using the slurry had a white paper glossiness that decreased only slightly but had a lower printing glossiness. The calcium carbonate water slurry containing the calcium carbonate in Comparative Example 4 having a large average particle size generally had high viscosities. The coated paper prepared by using the slurry had a white paper glossiness that decreased only slightly, but had a printing glossiness and an opacity that decreased a little. The calcium carbonate water slurry in Comparative Example 5, which was wet-ground with no grinding medium, had a high viscosity and was not able to be used as a coating liquid. The calcium carbonate water slurry in Comparative Example 6, which was produced by wet-grinding the same material calcium carbonate as in Comparative Example 5 but by a different method, had a high viscosity due to excessive grinding. The calcium carbonate water slurry in Comparative Example 7, which was produced by wet-grinding the same material calcium carbonate as in Example 1 and the like while the wet grinding time was halved, was not insufficiently ground, and had a high viscosity.

Each calcium carbonate water slurry in Comparative Examples 8 to 13, which was produced by wet-grinding the same material calcium carbonate as in Example 1 while the type and the amount of the dispersant were changed, had an excessively high viscosity for coating applications or had poor handling properties such as foaming.

## Claims

1. A method for producing a calcium carbonate water slurry, the method comprising the steps of:

   putting water, a grinding medium, and a dispersant into a dispersion device;
   putting a calcium carbonate into the dispersion device multiple times;
   stirring the mixture; and
   wet-grinding the calcium carbonate to give a calcium carbonate water slurry, wherein
   the calcium carbonate water slurry is ground until a viscosity of the calcium carbonate water slurry reaches a local minimum value or approximately the local minimum value,
   in the calcium carbonate water slurry, primary particles of the calcium carbonate have a BET specific surface area of 3 to 15 m$^2$/g and an aspect ratio of 2 to 10 as calculated from image analysis of an electron microscope image, primary particles and/or aggregated particles of the calcium carbonate have a volume-based average particle size of 0.3 to 1 $\mu$m as determined by laser diffraction particle size measurement,
the calcium carbonate water slurry has a solid content concentration of 70% by weight or more, and
the calcium carbonate water slurry has a Brookfield viscosity (at a rotation rate of 60 rpm) of 2,000 mPa·s or less and a high-shear viscosity (at a rotation rate of 1,100 rpm) of 80 mPa·s or less.

2.  The method for producing a calcium carbonate water slurry according to claim 1, wherein in the stirring, an integral stirring output is 0.5 kW/kg or more.

3.  The method for producing a calcium carbonate water slurry according to claim 1 or 2, wherein the calcium carbonate to be put into the dispersion device has a volume-based average particle size of 10 $\mu$m or less as determined by laser diffraction particle size measurement, and the primary particles have an aspect ratio of 2 to 10 as calculated from image analysis of an electron microscope image.

4.  The method for producing a calcium carbonate water slurry according to claim 1 or 2, wherein the calcium carbonate contained in the calcium carbonate water slurry has a volume-based particle size distribution width of 5 or less as determined by laser diffraction particle size measurement and calculated in accordance with equation:

    particle size distribution width = ([D90 value of calcium carbonate] - [D10 value of calcium carbonate])/volume-based average particle size of calcium carbonate as determined by laser diffraction particle size measurement (where D90 value is a particle size of a calcium carbonate at a cumulative volume of 90% in a volume-based particle size cumulative distribution as determined by laser diffraction particle size measurement; and D10 value is a particle size of the calcium carbonate at a cumulative volume of 10% in the volume-based particle size cumulative distribution as determined by laser diffraction particle size measurement).

5.  The method for producing a calcium carbonate water slurry according to claim 3, wherein the calcium carbonate contained in the calcium carbonate water slurry has a volume-based particle size distribution width of 5 or less as determined by laser diffraction particle size measurement and calculated in accordance with the equation:

    particle size distribution width = ([D90 value of calcium carbonate] - [D10 value of calcium carbonate])/volume-based average particle size of calcium carbonate as determined by laser diffraction particle size measurement (where D90 value is a particle size of a calcium carbonate at a cumulative volume of 90% in a volume-based particle size cumulative distribution as determined by laser diffraction particle size measurement; and D10 value is a particle size of the calcium carbonate at a cumulative volume of 10% in the volume-based particle size cumulative distribution as determined by laser diffraction particle size measurement).

6.  The method for producing a calcium carbonate water slurry according to claim 5, wherein the calcium carbonate to be put into the dispersion device is produced by a causticization process.

7.  A calcium carbonate water slurry produced by the method for producing a calcium carbonate water slurry according to claim 1 or 2.

8.  A calcium carbonate water slurry produced by the method for producing a calcium carbonate water slurry according to claim 6.

9.  A calcium carbonate water slurry comprising:

    a calcium carbonate, wherein
    primary particles of the calcium carbonate have a BET specific surface area of 3 to 15 m$^2$/g and an aspect ratio of 2 to 10 as calculated from image analysis of an electron microscope image, primary particles and/or aggregated particles of the calcium carbonate have a volume-based average particle size of 0.3 to 1 $\mu$m as determined by laser diffraction particle size measurement, and
    the water slurry has a solid content concentration of the calcium carbonate of 70% by weight or more, a Brookfield viscosity (at a rotation rate of 60 rpm) of 2,000 mPa s or less, and a high-shear viscosity (at a rotation rate of 1,100 rpm) of 80 mPa s or less.

**10.** The calcium carbonate water slurry according to claim 9, wherein the calcium carbonate water slurry comprises a polymer dispersant selected from the group consisting of a polycarboxylic acid dispersant, a polyacrylic acid dispersant, a naphthalenesulfonic acid-formalin condensate dispersant, and polyethylene glycol or a surfactant dispersant selected from the group consisting of an alkylsulfonic acid dispersant, a quaternary ammonium dispersant, and a higher alcohol alkylene oxide.

Fig. 1

Fig. 2

Fig. 3

SHIRAISHI CENTRAL LABORATORIES    3.0kV    X10,000    WD 16.7mm    1 μm

Fig. 4

SHIRAISHI CENTRAL LABORATORIES    3.0kV    X20,000    WD 16.2mm    1 μm

Fig. 5

SHIRAISHI CENTRAL LABORATORIES   3.0kV    X10,000    WD 16.2mm     1 μ m

Fig. 6

SHIRAISHI CENTRAL LABORATORIES   3.0kV    X20,000    WD 15.5mm     1 μ m

Fig. 7

Fig. 8

## INTERNATIONAL SEARCH REPORT

| International application No. |
|---|
| **PCT/JP2022/039483** |

**A. CLASSIFICATION OF SUBJECT MATTER**

*C01F 11/18*(2006.01)i; *D21H 19/38*(2006.01)i
FI:   C01F11/18 D; D21H19/38

According to International Patent Classification (IPC) or to both national classification and IPC

**B. FIELDS SEARCHED**

Minimum documentation searched (classification system followed by classification symbols)

C01F11/00 D21H

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | CN 113004716 A (HANGZHOU RUMO TECHNOLOGY CO., LTD.) 22 June 2021 (2021-06-22)<br>entire text | 1-10 |
| A | JP 7-197398 A (OKUTAMA KOGYO KK) 01 August 1995 (1995-08-01)<br>entire text | 1-10 |
| A | JP 2000-110092 A (NIPPON PAPER INDUSTRIES CO., LTD.) 18 April 2000 (2000-04-18)<br>entire text | 1-10 |
| A | JP 2000-355897 A (SHIRAISHI KOGYO KAISHA, LTD.) 26 December 2000 (2000-12-26)<br>entire text | 1-10 |
| A | JP 64-28215 A (NIPPON SHOKUBAI KAGAKU KOGYO CO., LTD.) 30 January 1989 (1989-01-30)<br>entire text | 1-10 |
| A | JP 10-77597 A (KAO CORP.) 24 March 1998 (1998-03-24)<br>entire text | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 December 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2022/039483** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 2007-152634 A (MITSUBISHI PAPER MILLS LTD.) 21 June 2007 (2007-06-21) entire text | 1-10 |
| A | JP 2008-190071 A (TAOKA CHEM. CO., LTD.) 21 August 2008 (2008-08-21) entire text | 1-10 |
| A | JP 2008-238755 A (OJI PAPER CO., LTD.) 09 October 2008 (2008-10-09) entire text | 1-10 |

Form PCT/ISA/210 (second sheet) (January 2015)

## INTERNATIONAL SEARCH REPORT
### Information on patent family members

International application No.

**PCT/JP2022/039483**

| Patent document cited in search report | | | Publication date (day/month/year) | Patent family member(s) | | | Publication date (day/month/year) |
|---|---|---|---|---|---|---|---|
| CN | 113004716 | A | 22 June 2021 | (Family: none) | | | |
| JP | 7-197398 | A | 01 August 1995 | (Family: none) | | | |
| JP | 2000-110092 | A | 18 April 2000 | (Family: none) | | | |
| JP | 2000-355897 | A | 26 December 2000 | (Family: none) | | | |
| JP | 64-28215 | A | 30 January 1989 | US entire text US CA KR AU | 4818783 4892902 1312987 10-1989-0007787 8094487 | A A A A A | |
| JP | 10-77597 | A | 24 March 1998 | (Family: none) | | | |
| JP | 2007-152634 | A | 21 June 2007 | (Family: none) | | | |
| JP | 2008-190071 | A | 21 August 2008 | (Family: none) | | | |
| JP | 2008-238755 | A | 09 October 2008 | (Family: none) | | | |

Form PCT/ISA/210 (patent family annex) (January 2015)

**EP 4 424 640 A1**

**Patent documents cited in the description**

- JP 11335119 A
- JP 2007161537 A
- JP 2009234894 A